# FASCICULE DE BREVET EUROPEEN

(11) **EP 4 119 900 B1**
(45) Date de publication et mention de la délivrance du brevet: **06.11.2024**
(21) Numéro de dépôt: 22181083.1
(22) Date de dépôt: 24.06.2022
(51) Int. Cl.: G01C 23/00

(54) **CALCULATEUR AMOVIBLE POUR AERONEF**
HERAUSNEHMBARER RECHNER FÜR LUFTFAHRZEUG
REMOVABLE COMPUTER FOR AIRCRAFT

(30) Priorité: 13.07.2021 FR 2107618
(43) Date de publication de la demande: 18.01.2023
(73) Titulaire: THALES, 92400 Courbevoie (FR)
(72) Inventeur: HUYNH, Rémi, 33700 MERIGNAC (FR); KUNTZ, Fabien, 33700 MERIGNAC (FR)
(74) Mandataire: Atout PI Laplace

(56) Documents cités:
- EP-A1- 3 546 888
- FR-A1- 3 075 357
- US-A1- 2018 366 008

## Description

### Domaine technique :

L'invention concerne le domaine technique de l'avionique et des opérations aériennes en général, et porte plus particulièrement sur la gestion, l'acquisition, la diffusion et la synchronisation de données relatives à un aéronef civil ou militaire.

Ces données peuvent être de plusieurs ordres :
- des données avionique (en Anglais *flight data*), qui sont les paramètres propres à l'avion à destination des enregistreurs de données de vols, et les paramètres de l'avion générés par ordinateur comme par exemple les références de positionnement inertielles (en Anglais *Inertial Reference data*) ou les données du système de gestion de vol (en Anglais *Flight Management System data*, ou FMS *data*), ... ;
- des données de maintenance, par exemple les inscriptions du carnet de bord technique (en Anglais *aircraft technical logbook entries*), les logiciels téléchargeables sur le terrain (en Anglais *field loadable software*), les bases de données avionique (en Anglais *avionics databases*), les défaillances et alarmes de l'ordinateur de bord (en Anglais *aircraft computer failures & warnings*), ... ;
- des données opérationnelles de vol : par exemple les dossiers de vol (en Anglais *flight folders*), les statuts opérationnels, les quantités de carburant, les plans de vol, ...

### Technique antérieure :

Un aéronef est un moyen de transport capable d'évoluer au sein de l'atmosphère terrestre, comme un avion, un hélicoptère ou un drone. L'aéronef traite quantité de données numériques, destinées ou non à être transmises et/ou modifiées par des équipements externes à l'aéronef, comme par exemple les données avionique, les données de maintenance et les données opérationnelles de vol décrites ci-dessus.

Afin de pouvoir communiquer avec des équipements tiers, qu'ils soient extérieurs à l'aéronef (par exemple des serveurs de maintenance, des enregistreurs de données de vol) ou internes (par exemple des organiseurs électroniques de poste de pilotage, plus connus sous le nom Anglais de *Electronic Flight Bag* ou EFB, utilisés par le personnel naviguant pour consulter les données opérationnelles de vol), les aéronefs disposent de calculateurs réalisant des fonctions de traitement des données avionique et de passerelle entre les équipements de l'aéronef et les équipements tiers. Ces calculateurs peuvent disposer de différents types de connectivité, filaire ou non, par exemple Bluetooth, WiFi (acronyme Anglais pour *Wireless Fidelity*), 4G (pour quatrième génération de standard de téléphonie mobile), liaison satellite (satcom), .... Ils peuvent jouer un rôle de point d'accès à bord de l'aéronef, par exemple WiFi, pour que le personnel navigant ait accès aux données avionique, et/ou pour que les passagers disposent d'un lien de communications leur permettant d'accéder au réseau internet.

Les systèmes embarqués à bord des avions sont des systèmes fiabilisés (ou à fiabilité garantie) dont les défaillances peuvent avoir des conséquences variables. Une défaillance peut se caractériser par la perte de la fonction considérée ou par la production de données erronées, avec ou sans détection d'une erreur. Selon le niveau de criticité des conséquences redoutées, la probabilité d'occurrence des erreurs doit être maintenue inférieure à un seuil d'acceptabilité. Ainsi, plus la conséquence est critique, plus la probabilité d'occurrence acceptable est faible. Par exemple, en aéronautique, un événement catastrophique (pouvant entraîner des décès multiples) doit avoir une probabilité d'occurrence inférieure à 10⁻⁹ par heure de vol, alors qu'un incident majeur (pouvant entraîner une réduction des marges de sécurité et des capacités opérationnelles, un inconfort ou des blessures légères) doit avoir une probabilité d'occurrence inférieure à 10⁻⁵ par heure de vol. L'architecture du système avionique ainsi que la conception de chaque composant de l'aéronef doivent garantir cette probabilité d'occurrence. Cela implique des garanties de taux de panne de chaque équipement (pannes physiques), des développements selon des normes contraignantes garantissant la fiabilité des applications (par exemple DO-178, ...) et des niveaux de vérification (couverture fonctionnelle et structurelle des tests) des logiciels suffisants. Ces exigences imposent un effort important de conception et de vérification, et imposent une limitation dans la complexité des traitements mis en oeuvre.

A l'inverse, certains systèmes peuvent être jugés comme ayant des conséquences tolérables, non critiques, ou même sans impact opérationnel significatif. Ce sont généralement des systèmes non-fiabilisés, ou à la fiabilité non garantie. Les exigences sur l'architecture, les composants physiques ou les traitements logiciels sont donc moindres, ce qui permet de mettre en oeuvre des traitements plus complexes, au prix d'un effort de développement et de vérification réduits par rapport à un système fiabilisé.

Ainsi, les équipements de communication embarqués dans un aéronef sont soumis à des contraintes règlementaires qui varient selon leur type. Les équipements avionique de pilotage installés à bord de l'aéronef doivent être certifiés par le régulateur aéronautique, qui délivre un certificat de type (en Anglais *Type Certificate*), ou TC. Les équipements avionique optionnels installés à bord de l'aéronef doivent être certifiés par le régulateur aéronautique qui délivre un certificat de type supplémentaire (en Anglais *Supplemental Type Certificate*), ou STC. Les équipements optionnels non-avionique non installés à bord de l'avion doivent uniquement être approuvés par le régulateur aéronautique, qui délivre une approbation opérationnelle (en Anglais *Operational Approval*), ou OA.

Les calculateurs assurant le lien entre les données internes à l'aéronef et les équipements tiers sont bien entendu soumis à ces règles de certification ou d'approbation. S'agissant d'équipements installés à bord des aéronefs et ayant accès à des données avionique potentiellement critiques, les calculateurs selon l'état de l'art doivent faire l'objet d'un certificat de type (TC). Leur développement fait alors l'objet de développements complexes (assurance qualité) et leur mise à jour est longue et coûteuse.

Pour répondre à cette problématique, la demanderesse a déposé la demande de brevet Européenne EP 3.546.888 A1 dans laquelle elle décrit un calculateur pour aéronef composé de deux parties :
- une partie socle, en Anglais *Dock*, reliée au système avionique, à divers systèmes de connectivité en vol et disposant d'un support d'accueil. S'agissant d'un équipement installé dans l'avion, il doit être certifié au niveau TC ou STC,
- une partie serveur, en Anglais *Server*, configurée pour pouvoir être installée et couplée à la partie socle par le support d'accueil. Le serveur dispose de ressources de traitement et de stockage, ainsi que divers systèmes de connectivité vers des équipements tiers. S'agissant d'un système portatif non installé dans l'avion et non critique, il ne doit être certifié qu'au niveau OA.

L'avantage d'une telle structure de calculateur en deux parties est que la partie serveur peut être modifiée ou mise à jour pour un coût et une durée de développement conventionnelle. En effet, n'étant pas installée de manière fixe dans l'aéronef, elle n'a pas à faire l'objet d'une certification au niveau TC ou STC. La partie serveur organisant les communications avec les équipements tiers et comprenant « l'intelligence » du calculateur, c'est la partie la plus susceptible de devoir être mises à jour. A l'inverse, la partie socle installée dans l'aéronef doit être certifiée au niveau TC ou STC. Cependant, les fonctions logicielles qu'elle exécute sont bien moins susceptibles de devoir être mises à jour que celles de la partie serveur.

Afin d'empêcher toute injection de données accidentelles ou malveillantes dans les systèmes certifiés et d'assurer une garantie de protection contre les risques cyber, le calculateur en deux parties décrit dans l'état de l'art dispose d'une liaison unidirectionnelle pour la réception de données depuis la partie avionique. Cette liaison unidirectionnelle permet d'éviter que des données ne soient injectées sur la partie avionique de l'aéronef par les équipements auxquels la partie serveur est reliée ou par une partie serveur modifiée dans un but malveillant, afin de garantir la sécurité des systèmes critiques de l'aéronef. La contrepartie est que les injections de données maitrisées sur la partie avionique sont impossibles.

Cette solution présente d'autres défauts :
- elle n'est pas protégée contre les inversions non intentionnelles de serveurs, une partie serveur pouvant être installé sur une partie socle différente de l'avion à laquelle elle est destinée, pouvant engendrer des confusions sur les données avionique reçues,
- elle n'est pas protégée contre l'introduction de parties serveurs modifiées dans le but de transmettre de manière illégitime des données avionique, et ne permet donc pas de protéger la confidentialité des données de l'aéronef.

Le calculateur pour aéronef selon l'invention a pour but de répondre à l'ensemble de ces problèmes en sécurisant le lien entre les deux parties. H

US 2018/366008 A1 divulgue différentes modalités de régulation et/ou d'intégration de systèmes avioniques avec des systèmes non-avioniques. Un système avionique est généralement associé avec un taux de panne physique inférieur et une vérification logique supérieure à ceux d'un système de type non-avionique.

### Résumé de l'invention :

A cet effet, la présente invention décrit un calculateur pour aéronef configuré pour relier au moins un équipement de type non avionique avec au moins un équipement de type avionique embarqué dans l'aéronef, selon la revendication 1. Le calculateur comprend :
- une partie socle configurée pour être installée de manière fixe dans l'aéronef, ladite partie socle :
   ∘ étant configurée pour être connectée audit au moins un équipement de type avionique,
   ∘ comprenant un support d'accueil,
- une partie serveur configurée pour être installée de manière amovible sur le support d'accueil de la partie socle, la partie socle et la partie serveur étant alors configurées pour échanger des données et signaux à travers un connecteur, la partie serveur étant configurée pour être connectée avec ledit au moins un équipement de type non avionique à travers au moins un lien de communications.

Dans le calculateur selon l'invention, la partie socle est connectée avec ledit au moins un équipement de type avionique par au moins un bus de données bidirectionnel. Elle est configurée pour mettre en oeuvre un mécanisme d'appairage avec la partie serveur, et pour autoriser ou interdire la transmission de données dans au moins une direction entre la partie serveur et ledit au moins un équipement de type avionique en fonction de l'état dudit mécanisme d'appairage.

Avantageusement, la partie socle est l'objet d'un certificat de type (TC) ou d'un certificat supplémentaire de type (STC), et la partie amovible est l'objet d'une approbation opérationnelle (OA).

Selon un mode de réalisation, la partie socle et/ou la partie serveur sont configurées pour mettre en oeuvre des fonctions d'analyse et de filtrage des données transmises par ledit au moins un équipement de type avionique vers ledit au moins un équipement de type non avionique.

Selon un mode de réalisation complémentaire, la partie socle et/ou la partie serveur sont configurées pour mettre en oeuvre des fonctions d'analyse et de filtrage des données transmises audit au moins un équipement de type avionique par ledit au moins un équipement de type non avionique.

Selon un mode de réalisation, la partie serveur comprend des moyens de calculs permettant de mettre en oeuvre le mécanisme d'appairage.

Avantageusement, la partie socle est configurée pour fournir un ou plusieurs liens d'alimentation à la partie serveur.

Avantageusement, la partie socle comprend des moyens de coupure d'un ou plusieurs des liens de communication de la partie serveur.

Avantageusement, la partie socle est configurée pour être connectée à un système de connectivité en vol, et la partie serveur est configurée pour accéder audit système de connectivité en vol à travers la partie socle.

Selon un mode de réalisation, la partie serveur est configurée pour mettre en oeuvre un mécanisme d'appairage avec au moins un équipement de type non avionique, et pour autoriser ou interdire la transmission de données avec ledit équipement en fonction de l'état dudit mécanisme d'appairage.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :
- la figure 1 illustre l'environnement technique global de l'invention ;
- la figure 2 représente plus précisément un dispositif selon un mode de réalisation de l'invention et ses interactions avec les équipements avionique et non avionique ;
- la figure 3 représente l'architecture fonctionnelle d'un calculateur pour aéronef selon un mode de réalisation de l'invention.

Des références identiques peuvent être utilisées dans des figures différentes lorsqu'elles désignent des éléments identiques ou comparables.

### Description détaillée :

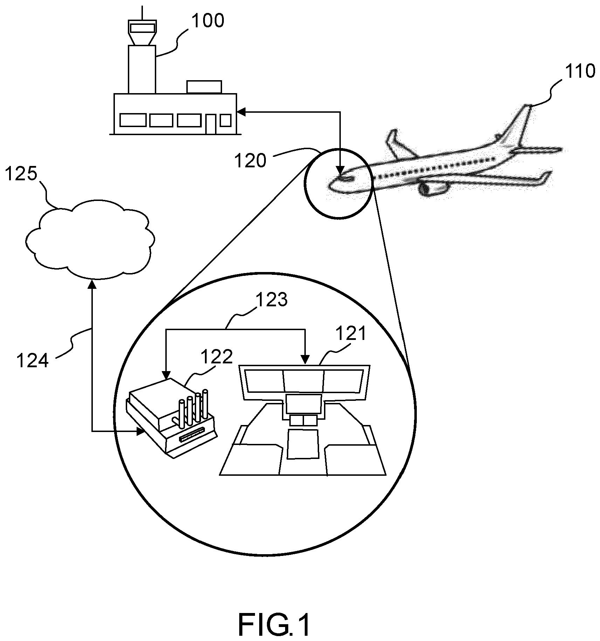

La figure 1 illustre l'environnement technique global de l'invention.

Elle montre des exemples de systèmes (ou « équipements ») de type « non-avionique » ou « (monde) ouvert » et des équipements de type « avionique » (certifiés par le régulateur au niveau TC ou STC).

Des moyens au sol (centres de contrôle et bureaux d'étude) 100 sont en communication avec un aéronef 110 comprenant éventuellement une cabine de pilotage ou un cockpit 120. Ses équipements de pilotage 121 (dits équipements avionique) sont généralement installés dans le cockpit 120 lorsque l'aéronef en dispose. Ces équipements comprennent par exemple un ou plusieurs calculateurs de bord (moyens de calcul, de mémorisation et de stockage de données), dont notamment un ou plusieurs systèmes avionique de pilotage, mais pas seulement, des moyens d'affichage ou de visualisation et de saisie de données, des moyens de communication, ainsi que (éventuellement) des moyens de retours haptiques. D'autres équipements, tels que par exemple une tablette EFB peuvent être embarqués dans l'aéronef. Le dispositif 122 selon l'invention peut interagir (communication bilatérale 123) avec les équipements avionique (de catégorie TC) 121. Le dispositif selon l'invention peut également être en communication 124 avec des ressources informatiques externes, accessibles par le réseau (par exemple informatique en nuage, en Anglais *Cloud computing* 125) ou par des liens de communication au sol (tels qu'un lien satellite ou une liaison Air-Sol, en Anglais *Air To Ground* ou ATG). En particulier, des calculs peuvent s'effectuer localement sur le dispositif 122 ou de manière partielle ou totale dans les moyens de calculs accessibles par le réseau. Les équipements de bord 121 sont généralement certifiés (catégories TC ou STC) et régulés tandis que les moyens informatiques 125 et équipements connectés ne le sont généralement pas (ou dans une moindre mesure, par exemple par approbation opérationnelle).

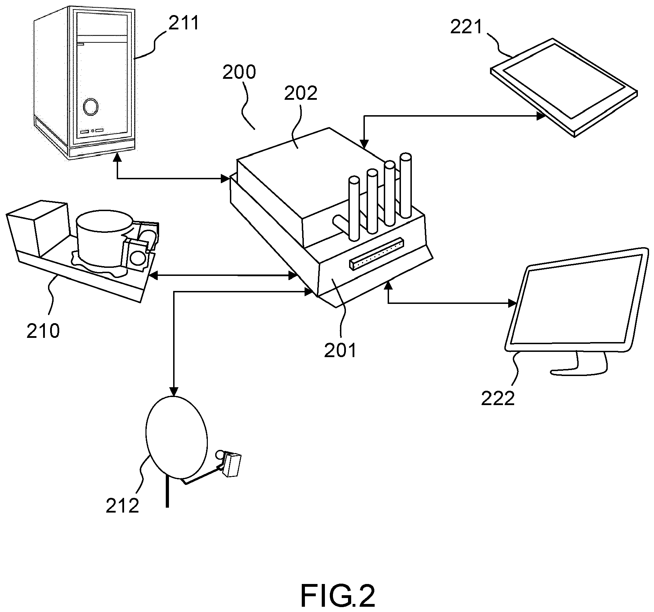

La figure 2 représente plus précisément un dispositif selon un mode de réalisation de l'invention et ses interactions avec les équipements avionique et non avionique.

Le calculateur 200 objet de l'invention comprend une première partie 201, dite partie socle. Cette partie est conçue pour être installée de manière fixe dans l'aéronef, et pour être reliée à travers un bus de données bidirectionnel aux équipements de type avionique, comme les équipements 210 et 211 délivrant les données de vol et les données avionique. Elle doit donc faire l'objet d'une homologation TC ou STC. Elle peut être reliée à des moyens de communication en vol 212, comme une liaison satellite.

La partie socle comprend des moyens de calcul comme un processeur, un processeur de signal numérique (plus connu sous le sigle Anglais de DSP pour *Digital Signal Processor*), un microcontrôleur, ou un circuit spécialisé tel qu'un ASIC (acronyme Anglais pour *Application Spécifie Integrated Circuit*) ou un FPGA (sigle Anglais pour *Field-Programmable Gate Array*), ainsi qu'une ou plusieurs mémoires. Enfin, elle comprend un support d'accueil destiné à accueillir la deuxième partie 202 du calculateur, dite partie serveur. Elle peut en outre disposer de moyens de connexion vers une interface homme machine permettant la saisie et la consultation des informations de plan de vol, des données de pilotage et la configuration de la partie serveur, comme un écran, une souris, un clavier, une caméra, un lecteur de cartes mémoires, un port USB, ...

La partie socle 201 est reliée à une source d'alimentation de l'aéronef, éventuellement de type avionique, et peut disposer de batteries pour un fonctionnement lorsque l'alimentation de l'avion est éteinte. Dans un mode de réalisation, la partie socle est configurée pour alimenter la partie serveur 202 lorsqu'elle est insérée dans le support d'accueil. Dans un autre mode de réalisation, la partie socle comprend un diviseur de puissance configuré de manière à procurer une double ligne d'alimentation à la partie serveur 202 : une première ligne alimentant continûment la partie serveur lorsqu'elle est insérée dans le support d'accueil, et une seconde ligne d'alimentation pouvant être connectée ou déconnectée lorsque l'aéronef est en vol de manière à suspendre ou couper les communications cellulaires de la partie serveur pour éviter toute interférence électromagnétique avec les calculateurs avionique certifiés embarqués. Enfin, le support d'accueil comprend une interface pour la transmission de données et de signaux entre la partie socle et la partie serveur.

La partie serveur 202 est amovible : elle peut être attachée ou détachée manuellement de la partie socle 201 par n'importe quel moyen de fixation, avantageusement un moyen de fixation ne nécessitant pas d'outils comme des vis papillons à quart de tour ou des griffes-ressort de maintien. Avantageusement, un dispositif de protection antivol (protection par sceau de sécurité, par clé, par code, par PIN, par empreinte digitale, etc..) permet de sécuriser le retrait de la partie serveur.

La partie serveur 202 peut être alimentée par la partie socle, et/ou disposer de moyens d'alimentations propres, comme une batterie ou des piles. Les moyens d'alimentation propre permettent l'utilisation de la partie serveur lorsque l'avion n'est plus en mesure d'alimenter le serveur au travers du dock, par exemple au sol lorsque le moteur de l'aéronef est éteint et que celui-ci n'est pas raccordé à une prise parking. Dans un mode de réalisation, la partie serveur 202 est isolée électriquement de la source d'alimentation de l'aéronef. A cet effet, la partie socle 201 peut comprendre un optocoupleur configuré pour éviter ou empêcher notamment toute surtension dans les circuits avionique certifiés.

Tout comme la partie socle, la partie serveur dispose de moyens de calcul, de type processeur, DSP, microcontrôleur, FPGA ou ASIC, et d'une mémoire. Elle dispose en outre de moyens de communications filaires (par exemple cellulaire (2G, 3G, 4G, 5G) Wifi, Bluetooth ou autre) ou sans fil (liaison Ethernet, SPI (en Anglais *Serial Peripheral Interface*), ...) vers des dispositifs non-avionique embarqués dans l'avion, comme l'EFB 221 ou un serveur 222 situé au sol permettant les échanges de données et l'administration opérationnelle de la partie serveur 202. Elle peut être configurée pour accéder aux moyens de communication en vol 212 à travers la partie socle.

Elle peut en outre disposer de moyens de connexion vers une interface homme machine permettent la saisie et la consultation des données avionique, comme les informations de plan de vol, les données de pilotage, ainsi que la configuration de la partie serveur, comme un écran, une souris, un clavier, une caméra, un port USB, un lecteur de cartes mémoires....

Dans un mode de réalisation, le serveur 202 est configuré pour déterminer l'état en vol ou au sol de l'aéronef, et pour arrêter, suspendre ou couper tout ou partie des communications sans fil, notamment de type cellulaire, en réponse à cet état afin d'empêcher les perturbations électromagnétiques. Les états peuvent être nuancés (e.g. roulage, décollage, train d'atterrissage activé, déployé, en cours, etc..) et les conséquences également modulées.

La partie serveur peut être perçue comme le « cerveau » ou l'entité de gestion qui se « greffe » à la partie avionique sans la perturber ni risquer de la corrompre.

La partie socle 201 est configurée pour mettre en oeuvre un mécanisme d'appairage avec la partie serveur 202. Ce mécanisme d'appairage permet à la partie socle d'authentifier la partie serveur, et de bloquer tout échange de données entre les deux parties du calculateur, dans un sens seulement ou dans les deux sens, lorsque la partie serveur n'est pas identifiée, de sorte qu'un équipement non identifié ne puisse perturber ou corrompre les éléments de la partie avionique, partie socle inclue, et que des données avionique ne puissent être transmises vers des équipements tiers de manière illégitime. Ce mécanisme d'appairage peut être mis en oeuvre par n'importe quel moyen : des moyens d'authentification simples, comme la transmission d'un identifiant unique, éventuellement crypté entre la partie serveur et la partie socle, ou des moyens d'authentification plus robustes, implémentés par exemple selon le standard SSL ou IEEE 802.1x.

Le calculateur en deux parties selon l'invention présente de nombreux avantages par rapport à l'état de l'art. Tout d'abord, la partie serveur ne requiert qu'une approbation opérationnelle pour son installation et son usage. Elle est donc évolutive pour un coût et un temps de développement bien moindres que les équipements ayant des certifications TC ou STC. Ces évolutions peuvent par exemple consister en l'introduction de nouveaux composants matériels, ou en des mises à jour destinées à assurer la compatibilité du calculateur avec de nouveaux standards de communications ou à introduire de nouvelles fonctionnalités.

La partie socle est moins évolutive que la partie serveur amovible puisque certifiée au niveau TC ou STC, mais cette partie est principalement en interface avec les équipements avionique, eux-mêmes peu susceptibles d'évoluer.

Le mécanisme d'appairage mis en place entre la partie socle 201 et la partie serveur 202 permet de protéger le dispositif contre les risques liés à l'amovibilité de la partie serveur :
- les risques d'échanges involontaires entre les parties serveur de calculateurs de deux avions différents, qui auraient pour conséquence une incohérence dans les données transmises aux équipements déportés de suivi et de maintenance,
- les risques d'échanges volontaires, réalisés dans le but d'obtenir des informations sur le fonctionnement de l'aéronef (données avionique, données opérationnelles, données propriétaires, flux vidéos, ...).

Seuls les serveurs compatibles et authentiques du socle peuvent recevoir/émettre des données depuis/vers la partie avionique de l'aéronef, ce qui permet de protéger le dispositif contre la contrefaçon de serveurs :
- l'appairage de la partie socle avec une partie serveur authentifiée permet de garantir que les données avionique sortant de l'avion sont transmises vers un dispositif de confiance ;
- l'appairage de la partie socle avec une partie serveur authentifiée permet de garantir que les données injectées sur la partie avionique proviennent d'un dispositif de confiance, et donc d'utiliser un bus de données bidirectionnel entre la partie socle et la partie serveur, et non un bus unidirectionnel comme dans l'état de l'art. Cette fonctionnalité est particulièrement importante en termes de sécurité de par le rôle critique que peuvent avoir les données injectées sur la partie avionique de l'aéronef.

Ce mécanisme d'appairage permet d'opérer la liaison entre la partie socle du calculateur et les composants de type avionique à travers une ou plusieurs liaisons bidirectionnelles, ce qui rend possible l'injection de données depuis les équipements tiers (EFB 221, dispositif au sol 222 ou autre) sur la partie avionique, comme par exemple des plans de vol, des mises à jour de bases de données, des listes de passagers, des flux vidéo...

Le mécanisme d'appairage du dispositif selon l'invention peut être configuré pour permettre à plusieurs serveurs de se connecter à un même socle, de manière à pouvoir intervertir les équipements par exemple en cas de panne ou de maintenance. A l'inverse, des serveurs peuvent être révoqués lorsqu'ils ne sont plus destinés à être utilisés ou lorsqu'ils disparaissent (perte ou vol), ce qui protège la partie avionique de l'aéronef du risque qu'une partie serveur obsolète ne soit récupérée et modifiée par une personne malintentionnée dans le but d'introduire des données malveillantes dans le système avionique ou de récupérer des données avionique.

Avantageusement, la partie serveur peut être configurée pour mettre en oeuvre un mécanisme d'appairage supplémentaire avec les équipements non avionique auxquels elle est reliée, assurant ainsi une authentification de bout-en-bout des équipements accédant aux données avionique de l'aéronef.

Dans un mode de réalisation, des fonctions additionnelles d'analyse et de filtrage des données injectées vers le système avionique peuvent être mises en oeuvre par le calculateur selon l'invention. En complément du mécanisme d'appairage, ce filtrage permet d'augmenter la sécurité du dispositif en assurant que les données injectées sur la partie avionique sont correctes. Il peut par exemple consister à vérifier le format des données transmises (vérification des formats de messages et protocoles de transport utilisés, des entêtes, des adresses MAC, des tailles de paquets, des erreurs de transmission, ...), à vérifier la syntaxe des données échangées, à vérifier si les valeurs injectées sont cohérentes, si elles sont signées, etc... Le filtrage agit ainsi à la manière d'un pare-feu (en Anglais *Firewall*) afin de protéger les composants de la partie avionique.

Les fonctions d'analyse et de filtrage des données injectées sur la partie avionique peuvent être implémentées dans la partie socle, c'est-à-dire au plus près de la partie avionique pour un niveau de sécurité maximal, mais sont dans ce cas peu évolutives. De manière alternative, elles peuvent être implémentées dans la partie serveur. Elles sont alors facilement évolutives. De manière alternative, les fonctions d'analyse et de filtrage peuvent être réparties entre la partie socle et la partie serveur.

Dans un mode de réalisation, des fonctions d'analyse et de filtrage sont mises en oeuvre par la partie socle et/ou la partie serveur sur les données sortant du système avionique, afin de bloquer la transmission de données potentiellement sensibles vers les équipements de type non avionique.

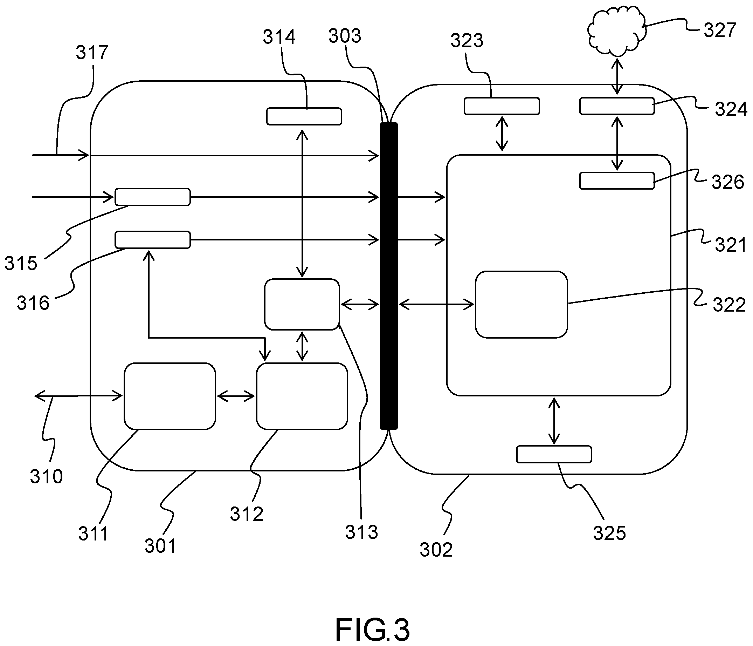

La figure 3 représente l'architecture fonctionnelle d'un calculateur pour aéronef selon un mode de réalisation de l'invention.

Elle comprend deux parties : une partie socle 301, destinée à être installée de manière fixe dans l'aéronef, et une partie serveur 302, destinée à être installée de manière amovible sur un support d'accueil de la partie socle. Une fois la partie serveur installée sur la partie socle, les deux parties sont reliées par un connecteur 303.

La partie socle est alimentée par une source d'alimentation avionique 317, étendue vers le connecteur 303 afin d'alimenter la partie serveur lorsque celle-ci est installée sur le support d'accueil. Avantageusement, la ligne d'alimentation vers le connecteur 303 peut être dédoublée pour intégrer des fonctionnalités supplémentaires, par exemple d'extinction des modules de communications de la partie serveur. Avantageusement, la partie socle peut comprendre des dispositifs destinés à protéger la ligne d'alimentation 317 contre les surtensions.

La partie socle est reliée à un ou plusieurs équipements de type avionique à travers un ou plusieurs bus de données avionique bidirectionnels 310, par exemple un enregistreur de données de vol A717 (en Anglais *flight data recorder*), ou un équipement de transmission de données avionique A429. L'aspect bidirectionnel du bus permet de récupérer et d'injecter des données avionique dans ces équipements.

La partie socle peut comprendre des moyens 314 lui permettant d'accéder à un lien de communication vers un système de connectivité en vol, par exemple une liaison satellitaire.

Avantageusement, la partie socle peut comprendre un dispositif 311 d'interface avec le ou les bus de données avionique, afin d'acheminer les données avionique sur des liens tels que des bus SPI ou Ethernet. Ce dispositif peut être configuré pour implémenter des fonctionnalités propres aux échanges avec les équipements de type avionique (gestion protocolaire des échanges sur le bus de données 310, stockage d'informations, ...). Il peut également être conçu pour isoler électriquement les liaisons de données avionique, comme par exemple un optocoupleur.

La partie socle comprend des moyens de calculs 312 destinés à :
- récupérer ou injecter des données avionique à travers la ou les bus de communication bidirectionnels 310,
- mettre en oeuvre un mécanisme d'appairage de la partie serveur, et autoriser ou interdire la transmission de données entre la partie serveur et les équipements de communication avionique accessible par le ou les bus de communication bidirectionnels 310, dans un sens ou dans l'autre, en fonction de l'état de ce mécanisme d'appairage, c'est-à-dire pour bloquer les transmissions vers/depuis une partie serveur non authentifiée,
- avantageusement, mettre en oeuvre des mécanismes d'analyse et de filtrage des données récupérées/injectées depuis/vers les équipements de type avionique de l'aéronef.

Avantageusement, la partie socle peut comprendre des moyens 313 de séparation des flux de données échangés avec la partie serveur, configurés pour séparer les flux de données avionique des autres flux, comme par exemple les flux de données du système de connectivité en vol, de manière à ce que les fonctions propres à la sécurité mises en oeuvre par la partie serveur ne s'appliquent que sur les données de type avionique. Cela permet de ne pas surcharger inutilement les moyens de calcul 312, et de ne pas pénaliser la latence des transmissions faites par la partie serveur sur le lien de communications satellite 314.

Les moyens de calculs 312 et 313 sont reliés au connecteur 303.

Enfin, la partie socle peut comprendre des moyens de coupure 315 et 316 destinés à suspendre les communications sans fil (4G, 5G, Wifi, Bluetooth, ...) de la partie serveur en fonction de l'état de l'avion, l'état de l'avion étant obtenu soit directement depuis les équipements de type avionique (module 315), soit par traitement des données avionique par les moyens de calcul 312 (module 316). Ces dispositifs peuvent être configurés pour activer/bloquer des signaux d'alimentation de la partie serveur en fonction de l'état de l'avion, ou pour transmettre des signaux de commande dédiés.

La partie serveur 302 est configurée pour échanger des données avec la partie socle 301 à travers le connecteur 303, en particulier des données de type avionique, un ou plusieurs signaux d'alimentation et/ou des signaux de contrôle des communications sans fil. Elle comprend des moyens de calcul 321 associés à une mémoire et configurés pour :
- mettre en oeuvre un mécanisme d'appairage en lien avec les moyens de calcul 312 de la partie socle,
- mettre en oeuvre un système d'exploitation destiné à superviser le fonctionnement de la partie serveur,
- mettre en oeuvre des applications 322 propres au traitement des données avionique, par exemple la génération de traitements et rapports de données avionique à des fins de maintenance, le traitement des plans de vol, la mise à jour des logiciels avionique, ...
- établir différents liens de communication vers des équipements de type non avionique, comme des EFB, smartphones, ordinateurs portables, enregistreurs de données de vol au sol, serveurs de maintenance et de contrôle à distance.

La partie serveur peut comprendre un lien de communications Bluetooth 323, un lien de communications Wifi 324 et/ou un lien de communications cellulaires 325 (type 4G, 5G ou autre). Selon un mode de réalisation, les moyens de calcul 321 peuvent être configurés pour mettre en oeuvre un point d'accès Wifi 326 (en Anglais *HotSpot*) afin d'établir un réseau local 327 (en Anglais *Local Area Network*) dans l'aéronef, permettant à différents équipements de se connecter à la partie serveur. Elle peut également être configurée pour faire le lien entre les différents liens de communication et le système de connectivité en vol 314 auquel elle accède à travers la partie socle.

Avantageusement, les moyens de calcul 321 de la partie serveur peuvent être configurés pour mettre en oeuvre des fonctions d'analyse et filtrage des données de type avionique injectées vers/récupérées de la partie socle.

Avantageusement, la partie serveur peut être configurée pour éteindre les différents liens de communication 323, 324 et 325 en fonction de signaux de commande et d'alimentation 315 et 316 transmis par la partie socle, ou en fonction des données avionique traitées par les moyens de calcul 321.

Avantageusement, la partie serveur peut être configurée pour mettre en oeuvre des mécanismes d'appairage avec les équipements non avionique auxquels elle est reliée, et autoriser ou interdire la transmission de données avec ledit équipement en fonction de l'état dudit mécanisme d'appairage. Ceci permet d'assurer l'authenticité de l'ensemble des équipements ayant accès aux données avionique de l'aéronef.

L'architecture du calculateur selon l'invention représentée à la figure 3 est évolutive et peut être agrémentée d'autres fonctionnalités destinées au traitement des données avionique et à la connectivité du calculateur.

Etant amovible et déconnectable de la partie socle, la partie serveur n'est pas soumise à des niveaux de certification élevés tels que les niveaux TC et STC. Les standards de communication qu'elle implémente, le système d'exploitation et les applications qu'elle embarque, et les analyses des données et filtrages éventuels qu'elle réalise peuvent alors être mis à jour, éventuellement à distance, au prix d'un coût et d'un temps de développement conventionnels.

## Revendications

1. Calculateur pour aéronef (200) configuré pour relier au moins un équipement de type non avionique (221, 222) avec au moins un équipement de type avionique (210, 211) embarqué dans l'aéronef, ledit calculateur comprenant :
- une partie socle (201, 301) configurée pour être installée de manière fixe dans l'aéronef, ladite partie socle :
∘ étant configurée pour être connectée audit au moins un équipement de type avionique (210, 211),
∘ comprenant un support d'accueil et des moyens de calcul (312, 313),
- une partie serveur (202, 302) configurée pour être installée de manière amovible sur le support d'accueil de la partie socle, la partie serveur comprenant des moyens de calcul (321), la partie socle et la partie serveur étant alors configurées pour échanger des données et signaux à travers un connecteur (303), la partie serveur étant configurée pour être connectée avec ledit au moins un équipement de type non avionique (221, 222) à travers au moins un lien de communications (323, 324, 325, 314),
le calculateur étant **caractérisé en ce que** la partie socle est connectée avec ledit au moins un équipement de type avionique (210, 211) par au moins un bus de données bidirectionnel (310), et **en ce que** :
- les moyens de calcul de la partie socle sont configurés pour mettre en oeuvre un mécanisme d'appairage avec les moyens de calcul de la partie serveur,
- les moyens de calcul de la partie socle sont configurés pour autoriser ou interdire la transmission de données dans au moins une direction entre la partie serveur et ledit au moins un équipement de type avionique (210, 211) en fonction de l'état dudit mécanisme d'appairage.

2. Calculateur pour aéronef selon la revendication 1, dans lequel la partie socle est l'objet d'un certificat de type ou d'un certificat supplémentaire de type, et où la partie amovible est l'objet d'une approbation opérationnelle.

3. Calculateur pour aéronef selon l'une des revendications 1 à 2, dans lequel la partie socle et/ou la partie serveur sont configurées pour mettre en oeuvre des fonctions d'analyse et de filtrage des données transmises par ledit au moins un équipement de type avionique (210, 211) vers ledit au moins un équipement de type non avionique (221, 222).

4. Calculateur pour aéronef selon l'une des revendications 1 à 3, dans lequel la partie socle et/ou la partie serveur sont configurées pour mettre en oeuvre des fonctions d'analyse et de filtrage des données transmises audit au moins un équipement de type avionique (210, 211) par ledit au moins un équipement de type non avionique (221, 222).

5. Calculateur pour aéronef selon l'une des revendications 1 à 4, dans lequel la partie socle est configurée pour fournir un ou plusieurs liens d'alimentation (301) à la partie serveur.

6. Calculateur pour aéronef selon l'une des revendications 1 à 5, dans lequel la partie socle comprend des moyens de coupure (315, 316) d'un ou plusieurs des liens de communication (323, 324, 325) de la partie serveur.

7. Calculateur pour aéronef selon l'une des revendications 1 à 6, dans lequel la partie socle est configurée pour être connectée à un système de connectivité en vol (212, 314), et la partie serveur est configurée pour accéder audit système de connectivité en vol à travers la partie socle.

8. Calculateur pour aéronef selon l'une des revendications 1 à 7, dans lequel la partie serveur est configurée pour mettre en oeuvre un mécanisme d'appairage avec au moins un équipement de type non avionique (221, 222), et pour autoriser ou interdire la transmission de données avec ledit équipement en fonction de l'état dudit mécanisme d'appairage.

## Patentansprüche

1. Rechner für ein Luftfahrzeug (200), der so konfiguriert ist, dass er mindestens eine Ausrüstung vom Typ Nicht-Avionik (221, 222) mit mindestens einer Ausrüstung vom Typ Avionik (210, 211) verbindet, die in dem Luftfahrzeug mitgeführt wird, wobei der Rechner Folgendes umfasst:
- einem Sockelabschnitt (201, 301), der konfiguriert ist, um fest in das Luftfahrzeug installiert zu werden, wobei der Sockelabschnitt:
o konfiguriert ist, um mit der mindestens einen Ausrüstung vom Typ Avionik (210, 211) verbunden zu werden,
o eine Aufnahmehalterung und Rechenmittel (312, 313) umfasst,
- einen Serverabschnitt (202, 302), der konfiguriert ist, um abnehmbar an der Aufnahmehalterung des Sockelabschnitts installiert zu werden, wobei der Serverabschnitt Rechenmittel (321) umfasst, wobei der Sockelabschnitt und der Serverabschnitt dann konfiguriert sind, um Daten und Signale über einen Verbinder (303) auszutauschen, wobei der Serverabschnitt konfiguriert ist, um mit der mindestens einen Ausrüstung vom Typ Nicht-Avionik (221, 222) über mindestens eine Kommunikationsverbindung (323, 324, 325, 314) verbunden zu werden,
wobei der Rechner **dadurch gekennzeichnet ist, dass** der Sockelabschnitt mit der mindestens einen Ausrüstung vom Typ Avionik (210, 211) durch mindestens einen bidirektionalen Datenbus (310) verbunden ist, und dadurch, dass:
- die Rechenmittel des Sockelabschnitts so konfiguriert sind, dass sie einen Mechanismus der paarweisen Zuordnung zu den Rechenmitteln des Serverabschnitts implementieren,
- die Rechenmittel des Sockelabschnitts so konfiguriert sind, dass sie die Datenübertragung in mindestens einer Richtung zwischen dem Serverabschnitt und der mindestens einen Ausrüstung vom Typ Avionik (210, 211) in Abhängigkeit vom Zustand des Mechanismus der paarweisen Zuordnung zulassen oder verbieten.

2. Rechner für ein Luftfahrzeug nach Anspruch 1, wobei der Sockelabschnitt Gegenstand einer Musterzulassung oder einer ergänzenden Musterzulassung bildet, und worin der abnehmbare Abschnitt den Gegenstand einer Betriebsgenehmigung bildet.

3. Rechner für ein Luftfahrzeug nach einem der Ansprüche 1 bis 2, wobei der Sockelabschnitt und/oder der Serverabschnitt so konfiguriert sind, dass sie Funktionen zur Analyse und Filterung der Daten implementieren, die von der mindestens einen Ausrüstung vom Typ Avionik (210, 211) an die mindestens eine Ausrüstung vom Typ Nicht-Avionik (221, 222) übertragen werden.

4. Rechner für ein Luftfahrzeug nach einem der Ansprüche 1 bis 3, wobei der Sockelabschnitt und/oder der Serverabschnitt so konfiguriert sind, dass sie Funktionen zur Analyse und Filterung der Daten implementieren, die von der mindestens einen Ausrüstung vom Typ Nicht-Avionik (210, 211) an die mindestens eine Ausrüstung vom Typ Avionik (221, 222) übertragen werden.

5. Rechner für ein Luftfahrzeug nach einem der Ansprüche 1 bis 4, wobei der Sockelabschnitt so konfiguriert ist, dass er eine oder mehrere Stromversorgungsverbindungen (301) für den Serverabschnitt bereitstellt.

6. Rechner für ein Luftfahrzeug nach einem der Ansprüche 1 bis 5, wobei der Sockelabschnitt Mittel zum Trennen (315, 316) einer oder mehrerer der Kommunikationsverbindungen (323, 324, 325) des Serverabschnitts umfasst.

7. Rechner für ein Luftfahrzeug nach einem der Ansprüche 1 bis 6, wobei der Sockelabschnitt konfiguriert ist, um mit einem Flugkonnektivitätssystem (212, 314) verbunden zu werden, und der Serverabschnitt konfiguriert ist, um über den Sockelabschnitt auf das Flugkonnektivitätssystem zuzugreifen.

8. Rechner für ein Luftfahrzeug nach einem der Ansprüche 1 bis 7, wobei der Serverabschnitt so konfiguriert ist, dass er einen Mechanismus der paarweisen Zuordnung zu mindestens einer Ausrüstung vom Typ Nicht-Avionik (221, 222) implementiert, und die Datenübertragung mit der Ausrüstung in Abhängigkeit vom Zustand des Mechanismus der paarweisen Zuordnung zulässt oder verbietet.

## Claims

1. A computer (200) for an aircraft, configured to connect at least one non-avionics equipment (221, 222) to at least one avionics equipment (210, 211) on board the aircraft, said computer comprising:
- a dock part (201, 301) configured to be installed fixedly in the aircraft, said dock part:
∘ being configured to be connected to said at least one avionics equipment (210, 211),
∘ comprising a docking station and computing means (312, 313),
- a server part (202, 302) configured to be removably installed on the docking station of the dock part, the server part comprising computing means (321), the dock part and the server part then being configured to exchange data and signals through a connector (303), the server part being configured to be connected to said at least one non-avionics equipment (221, 222) through at least one communications link (323, 324, 325, 314),
the computer being **characterised in that** the dock part is connected to said at least one avionics equipment (210, 211) by way of at least one bidirectional data bus (310), and **in that**:
- the computing means of the dock part being configured to implement a pairing mechanism with the computing means of the server part.
- the computing means of the dock part are configured to authorise or prevent the transmission of data in at least one direction between the server part and said at least one avionics equipment (210, 211) depending on the state of said pairing mechanism.

2. The computer for an aircraft according to claim 1, wherein the dock part is subject to a type certificate or a supplemental type certificate, and where the removable part is subject to an operational approval.

3. The computer for an aircraft according to any one of claims 1 to 2, wherein the dock part and/or the server part are configured to implement analysing and filtering functions on the data transmitted by said at least one avionics equipment (210, 211) to said at least one non-avionics equipment (221, 222).

4. The computer for an aircraft according to any one of claims 1 to 3, wherein the dock part and/or the server part are configured to implement analysing and filtering functions on the data transmitted to said at least one avionics equipment (210, 211) by said at least one non-avionics equipment (221, 222).

5. The computer for an aircraft according to one of claims 1 to 4, wherein the dock part is configured to provide one or more power supply links (301) to the server part.

6. The computer for an aircraft according to one of claims 1 to 5, wherein the dock part comprises disconnecting means (315, 316) for disconnecting one or more of the communication links (323, 324, 325) of the server part.

7. The computer for an aircraft according to one of claims 1 to 6, wherein the dock part is configured to be connected to an in-flight connectivity system (212, 314), and the server part is configured to access said in-flight connectivity system through the dock part.

8. The computer for an aircraft according to one of claims 1 to 7, wherein the server part is configured to implement a pairing mechanism with at least one non-avionics equipment (221, 222), and to authorise or prevent the transmission of data with said equipment depending on the state of said pairing mechanism.
